# EUROPEAN PATENT SPECIFICATION

(11) **EP 0 704 780 B1**
(45) Date of publication and mention of the grant of the patent: **16.01.2002**
(21) Application number: 95912466.0
(22) Date of filing: 17.03.1995
(51) Int. Cl.: G05B 19/18, B25J 9/16

(54) **INDUSTRIAL ROBOT DEVICE AND METHOD FOR EXECUTING JOBS USING THE SAME**
INDUSTRIE-ROBOTER UND VERFAHREN ZUR AUSFÜHRUNG VON AUFGABEN DESSELBIGEN
ROBOT INDUSTRIEL ET METHODE D'EXECUTION DE TACHES A L'AIDE DE CE ROBOT

(30) Priority: 15.04.1994 JP 10160394
(43) Date of publication of application: 03.04.1996
(73) Proprietor: FANUC LTD., Minamitsuru-gun, Yamanashi 401-05 (JP)
(72) Inventor: WATANABE, Atsushi FANUC Manshonharimomi room7-207, Yamanashi 401-05 (JP); NIHEI, Ryo, Yamanashi 403 (JP); TERADA, Akihiro, Yamanashi 403 (JP); BAN, Kazunori FANUC Manshonharimomi Room 8-310, Yamanashi 401-05 (JP)
(74) Representative: Billington, Lawrence Emlyn
(86) International application number: JP9500487
(87) International publication number: WO9528667

(56) References cited:
- EP-A- 0 214 666
- GB-A- 2 257 114
- JP-A- 1 187 602
- JP-A- 2 202 606
- US-A- 4 826 392
- US-A- 4 991 281
- US-A- 5 023 808
- US-A- 5 254 923
- US-A- 5 303 384

## Description

The present invention relates to an industrial robot apparatus including two traveling robots to be used for various kinds of work such as automatic assembly of a variety of mechanical parts, and a work executing method using such industrial robot apparatus.

When assembly or other work including operations for holding and carrying work for an article is to be executed by using a robot, a dual-arm robot system is often used in which two robot arms having a hand respectively perform cooperative actions. The dual-arm robot system is realized by controlling two robots using a common control means. The control means such as one described above is available either in the form of single robot controller designed to collectively control the two robots or in the form of two robot controllers each independently connected to a robot but mutually connected with a communication line.

Generally, for an assembly work of mechanical parts, various kinds of parts are concerned, and various kinds of work are performed by a robot, so that the work which requires dual-arm cooperation and the work in which an independent operation is suitable are included in a mixed manner. For example, a single arm robot is sufficient for the work in which small-sized lightweight parts supplied to a part supply zone are merely carried to an assembly table position. However, dual-arm cooperation may probably be required when each robot arm holds a separate part during assembly and performs an assembly process.

These various kinds of work include the work which cannot be done unless two robots are brought close to each other or brought into contact with each other and the work which can be done even if two robots are positioned apart from each other. For the work in which the robot apparatus is operated in the dual-arm robot system state, it is necessary for two robots to be brought close to each other or brought into contact with each other in order to obtain a largest possible overlapping working range for the two robots (the working range of dual-arm robot system). For the work in which each robot is operated by using a single arm, however, it is rather preferable that the two robots be positioned apart from each other to some degree in order to obtain a largest possible working range for each robot.

It is therefore desired that the robot apparatus including a dual-arm robot system made up of two robots has a capacity to properly cope with the above-described situation. However, a robot apparatus having the aforementioned capacity has not yet been disclosed, though many technologies relating to a dual-arm robot system have been proposed as will be described in the following items (1) to (5).
(1) Japanese Utility Model Laid-Open No. 4-2577, Japanese Utility Model Application Laid-Open No. 4-2578, Japanese Patent Application Laid-Open No. 1-310874, Japanese Patent Application Laid-Open No. 1-310875, Japanese Patent Application Laid-Open No. 5-92379, and Japanese Patent Application Laid-Open No. 5-301180 have disclosed the technologies regarding the control of dual arm by a master-slave system. However, these applications do not disclose any mechanical configurations and do not explain concretely any use of dual arm during assembly work.
(2) Japanese Patent Application Laid-Open 5-262406 discloses the technology relating to teaching to a dual-arm robot system. However, this application does not show any mechanical configuration and do not explain concretely any use of dual arm during assembly work.
(3) Japanese Utility Model Application Laid-Open No. 5-20882, Japanese Patent Application Laid-Open No. 2-271402, and Japanese Patent Application Laid-Open No. 5-233056 explain the mechanical configurations of-dual-arm robot systems, and show that the dual-arm robot systems are made up of two robots. However, the bases of the two robots are joined with each other, so that, in this case, the technology for performing various kinds of work by changing the relative position of two robots is not disclosed.
(4) Japanese Patent Application Laid-Open No. 1-295773 discloses a system in which two robots are connected to one rotating base, and this rotating base, is run on a guide rail. In this system, however, these two robots are not used in a manner such that they travel individually on the guide rail.
(5) Japanese Utility Model Application Publicated No. 5-46865 discloses a system in which two robots are connected to one rotating base, and the two robots are rotated and moved simultaneously, but does not show concretely that the two robots may be used in a manner such that-they move independently.

As described above, according to the prior art, two robots are not used properly both as those in a dual-arm robot system and as two independent single arm robots. Also, when assembly work or the like is performed by using dual arms, the relative positional relationship between two robots is always fixed, and thus free choice of relative positions is not allowed. Due to such limitations, the prior art has the problems described below.
(1) During assembly work or the like, when a process including complicated work is to be carried out by the cooperative operation of two robots, that is, by the cooperative control of two arms, or when work is to be done with a system in which the use of a jig or the like for connecting a part to a predetermined position is minimized, all of the parts to be assembled must be supplied to a region which is within reach of two arms all the way through.
   This system has a disadvantage in that the operating ranges of two arms are restricted due to the presence of the supplied part, or a large-scale conveyor system capable of supplying parts in the three-dimensional directions is required.
   Besides, when many parts must be supplied from the peripheral regions, the flow of parts becomes too complicated. If the working range common to the two robots is expanded to a largest possible extent in order to make the most of the advantage of dual-arm robot system, the working ranges of individual robots decrease. In contrast, if each of the individual working ranges is to be increased to facilitate the supply of parts, the common working range decreases.
(2) As shown in part of the aforementioned Publications, the working range can be expanded to some extent to distribute the location of the parts to be supplied by using a system in which two robots composing a dual-arm robot system are mounted on a rotating base designed for being capable of changing the orientation of robot. In such a system, however, the flow of parts supply inevitably becomes centripetal, so that the degree of freedom of the arrangement including that of the supply line will be narrowed. Also, the two arms are always set in the same direction only without the freedom of choice, so that the efficiency for carrying parts is poor.
(3) If a system in which a dual-arm robot system is made to travel on a traveling path is used, the distributed location of parts is possible. However, two arms cannot be moved individually to a specified position on the path, so that the work efficiency is limited.
   In addition to the above problems (1) to (3), a problem described in (4) relating to hand exchange occurs.
(4) When carrying out assembly work using a dual-arm robot system, it becomes possible to assign various processes to the robot system intensively, by changing hands to be mounted on the robots when necessary in the process of the assembly work. This results in an improvement of the work efficiency. However, when hands to be used for the arms of two robots are placed within the respective working ranges of two robots, the working range of each robot is narrowed by the hands.

For exchange of hands, it is also conceivable to mount hands on a table equipped with an indexing (position dividing) mechanism like a turret of a machine tool. With this method, however, the control of indexing operation and the control of robot operation have to be carried out independently, causing a fall of working efficiency.

An object of the present invention is to provide an industrial robot apparatus including two travelling robots, capable of solving or alleviating the problem of the above-described prior arts, and also to provide a method of executing various kinds of work such as assembly work, by using such an industrial robot apparatus.

An industrial robot apparatus which includes two travelling robots, and which is in accordance with the preamble of attached independent claim 1 and which operates in accordance with the preamble of attached independent claim 11, is disclosed in GB-A-2257114.

US-A-5,254,923 discloses a method of synchronizing the operations of at least two industrial robots, US-A-4,991,281 discloses an assembling robot operable in conjunction with an assembly line for car bodies, and EP-A-0214666 discloses an apparatus for managing tools for use in a machine tool having an automatic tool changing apparatus.

According to a first aspect of the present invention there is provided an industrial robot apparatus comprising: a robot travel path; a pair of travelling bases operable to travel along said travel path, each of which bases has a respective robot mounted thereon or is configured integrally with a respective robot; a robot control means capable of operating the two robots and capable of controlling the travel of said pair of travelling bases along the travel path, and the stopping thereof at a predetermined position; and a common work table installed within a range which the distal end of the arm of each robot can reach when the two travelling bases are brought closest to each other; characterised in that: the robot control means is capable of operating the two robots independently when the two associated travelling bases are separated from one another along the travel path, and cooperatively when the two travelling bases have been brought closest to each other along the travel path; the robot control means can independently control the travel of the pair of travelling bases; the common work table is installed at one lateral side of the travel path; and the two robots are configured such that their arms can extend together at said one lateral side of the travel path, to be capable of adopting a dual-arm cooperative state in order to carry out work together on the common work table.

Further, separate part supply tables for placing or supplying parts to be given to each robot may be installed on the opposite side to the common work table beyond the travel path, and within a range which can be reached by the arm distal end of each robot on the traveling base when the two traveling bases are separated a certain distance from each other from their mutually closest positions.

Preferably, each of said part supply tables comprises a part supply conveyor extending in a direction substantially perpendicular to the travel direction of the travel path.

Preferably, the travel path consists of one path common to the two traveling basas, or two parallel paths respectively corresponding to each of the two traveling bases.

Preferably, a hand stand for holding or placing a plurality of hands for exchanging the hand of the robots is installed at a position opposite to the common work table with respect to the path and between the part supply tables.

Preferably, the-hand stand is of a rotating type and the rotation thereof is controlled by a controller in connection with the operation of at least one robot.

Preferably, a connecting device is provided to connect the two traveling bases to each other, or there is provided a connecting device capable of fixing the two traveling bases to the travel path or a floor on which the travel path is laid when the traveling bases are brought closest to each other.

According to a second aspect of the present invention there is provided a work executing method for an industrial robot apparatus, wherein a robot control means operates a pair of travelling bases to travel along a robot travel path and to stop at a predetermined position, each of which bases has a respective robot mounted thereon or is configured integrally with a respective robot; characterised in that: the robot control means independently controls the travel of the pair of travelling bases, operates the two robots independently when the two associated travelling bases are separated from one another along the travel path, and cooperatively when the two travelling bases have been brought closest to each other along the travel path; and in the latter case the robot control means operates the two robots in a dual-arm cooperative state to carry out work together on a common work table installed at one lateral side of the travel path.

According to a development of the second aspect of the invention, a work executing method for an industrial robot apparatus comprises the steps of making a robot hand hold a part to be assembled or fabricated when the pair of travelling bases are separated from each other on the travel path; moving said pair of travelling bases to approach one another on said travel path; switching the control mode of each robot from a previous independent operation state, in which said dual-arm cooperative state is inoperative, to the dual-arm cooperative state when said pair of travelling bases are brought closest to each other, and making each robot at this position perform assembly or fabrication work on said common work table in said dual-arm cooperative state under control of said robot control means; and switching the control mode of each robot from said dual-arm cooperative state back to the independent operation state, in which said dual-arm cooperative state is released, after said work is completed.

Preferably, the work executing method further comprises a step of making a robot arm hold one particular hand among the hands placed or held on a hand stand by controlling the hand stand in connection with the robot operation before the robot performs assembly or fabrication work on the common table.

Preferably, the work executing method further comprises a step of connecting the pair of traveling bases to each other on the travel path, or fixing the pair of traveling bases to the travel path or a floor on which the travel path is laid when said traveling bases are brought closest to each other.

According to the present invention, having the above configuration, each of two robots can effectively perform independent carrying work and the like as an independently "operating robot, and also can perform complicated assembly work and the like by a cooperative dual-arm operation when the two robots are brought close each other.

### BRIEF DESCRIPTION OF THE DRAWINGS

FIG. 1 is a block diagram showing the entire configuration of an industrial robot apparatus in accordance with an exemplary embodiment of the present invention;
FIG. 2A is a general view showing the entire configuration of one embodiment of an industrial robot apparatus in accordance with the present invention, and also showing a state in which two traveling robots composing the apparatus are performing dual-arm cooperative operation while when they are located close to each other;
FIG. 2B is a general view showing the state in which the two traveling robots shown in PIG. 2A are allowed to operate independently from each other at-their positions separated from each other.
FIG. 3 is a perspective view corresponding to FIG. 2A and schematically showing a state in which two traveling robots located close to each other are performing dual-arm cooperative operation.
FIG. 4 is a perspective view schematically showing a state in which two traveling robots are at intermediate positions between the positions of FIG. 2A and those of FIG. 2B;
FIG. 5 is a perspective view corresponding to FIG. 2B and schematically showing a state in which two traveling robots are performing independent operation while being positioned apart from each other;
FIG. 6 is a schematic view showing one embodiment of a connecting device for connecting the traveling bases of two traveling robots together with an enlarged view of the connecting device;
FIG. 7 is a schematic view showing one embodiment of a coupling device for fixing the traveling bases of two traveling robots to the base of the traveling track of the robots, together with an enlarged view of the coupling device; and
FIG. 8 is a schematic view showing the stages of the cooperative operation of the robot and the rotating hand stand by taking an example of the case where a hand H mounted on the traveling robot is exchanged for a hand H' prepared in a hand magazine on the rotating hand stand.

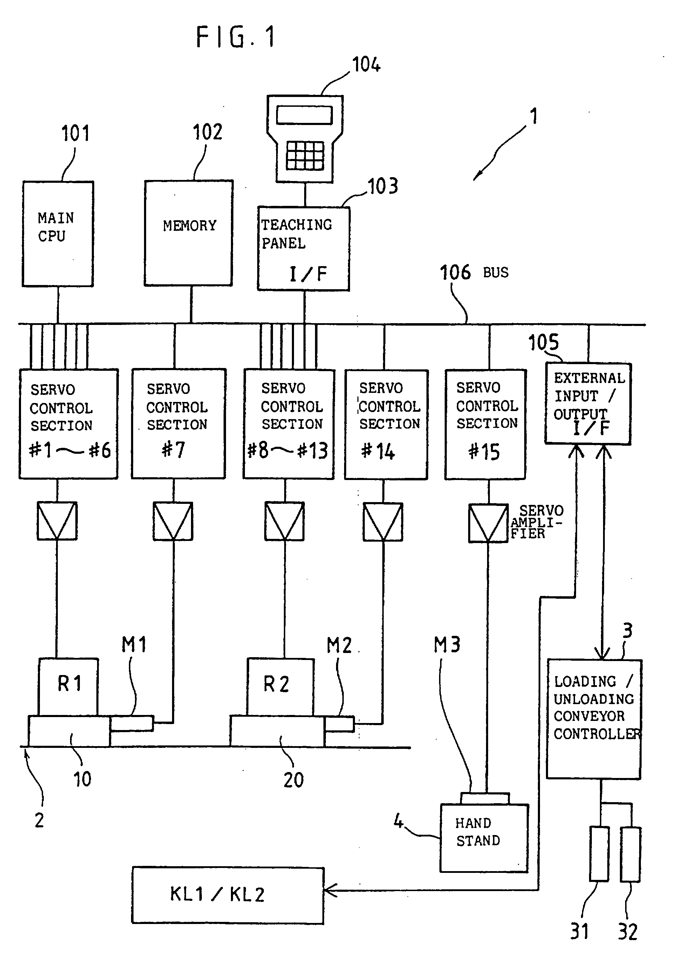

FIG. 1 is a block diagram showing the entire configuration of an industrial robot apparatus in accordance with an exemplary embodiment of the present invention.

The entire system including an industrial robot apparatus comprises a robot controller 1, a robot travel path (travel axis) 2, two robots R1 and R2 mounted on the robot travel path 2, a loading/unloading conveyor controller 3, loading and unloading conveyors 31 and 32, and a rotating hand stand 4. If necessary, the system is equipped with a connecting device and the air drive section KL1 thereof and/or a robots-to-base coupling device and the air drive section KL2 thereof.

The robot controller 1, which is also used as a controller for the entire system, has a central processing unit (main CPU, hereinafter referred to as CPU). Connected to the CPU 101 via bus 106 are a memory 102 consisting of RAM and ROM, a teaching panel interface 103 connected to a teaching panel 104 for teaching of motion, setting of coordinates, etc., an input/output interface 105 connected to the loading/unloading conveyor controller 3, and servo control sections No. 1 to No. 15.

The servo control sections No. 1 to No. 6 are connected to the motors for respective axes of the robot R1, and the servo control sections No. 8 to No. 13 are connected via servo amplifier to the motors for respective axes of the robot R2. The servo control section No. 7 is connected to a drive motor M1 of a traveling base 10 for the robot R1, and the servo control section No. 14 is connected to a drive motor M2 of a traveling base 20 for the robot R2. The servo control section No. 15 is connected to a motor M3 for driving a drive shaft of the rotating hand stand 4 via a speed reducing mechanism.

In the case where the connecting device and the air drive section KL1 thereof and/or the robots-to-base coupling device KL2 and the air drive section thereof are equipped, the air drive section KL1 and/or the air drive section KL2 are connected to the input/output interface 105.

In this embodiment, the independent control (including travel control), the dual-arm cooperative control, the cooperative control with the rotating hand stand 4 and the like of the robots R1 and R2 are carried out collectively by the main CPU 101 in accordance with the motion program stored in the memory 102 of the robot controller 1. The switching control of the operative/inoperative state of the air drive section KL1 and/or the air drive section KL2 and the sending and receiving of various signals to and from the loading/unloading conveyor controller are carried out under the control of the CPU 101 via the input/output interface 105.

As described above, the control means for collectively controlling the entire system is not necessarily required to be composed of a robot controller which integrates the robot arm axes, the travel axis and the like of the two robots by bus connection. For example, in the independent operation (noncooperative state), two robot controllers used for respectively controlling the two robots may be connected by a communication line. In this case, the number of the servo control sections in FIG. 1 can be reduced to the necessary number, and two robot controllers available by connecting a communication interface to the bus 106 can be used.

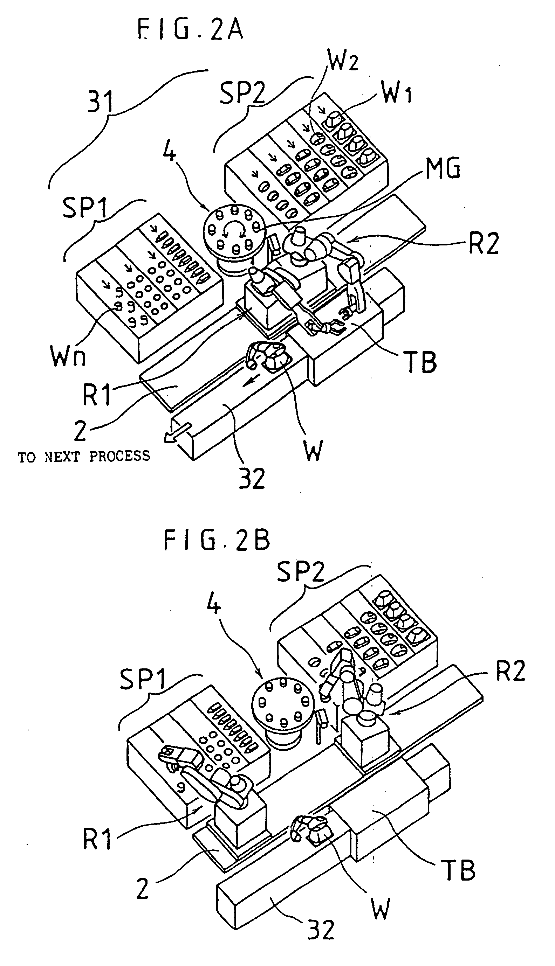

FIGS. 2A and 2B respectively show the appearance of the entire configuration of one embodiment of an industrial robot apparatus in accordance with the present invention. FIG. 2A shows the appearance in the case where the two robots R1 and R2 are brought into contact for dual-arm cooperation, while FIG. 2B shows the appearance in the case where the two robots R1 and R2 are separated for independent operation.

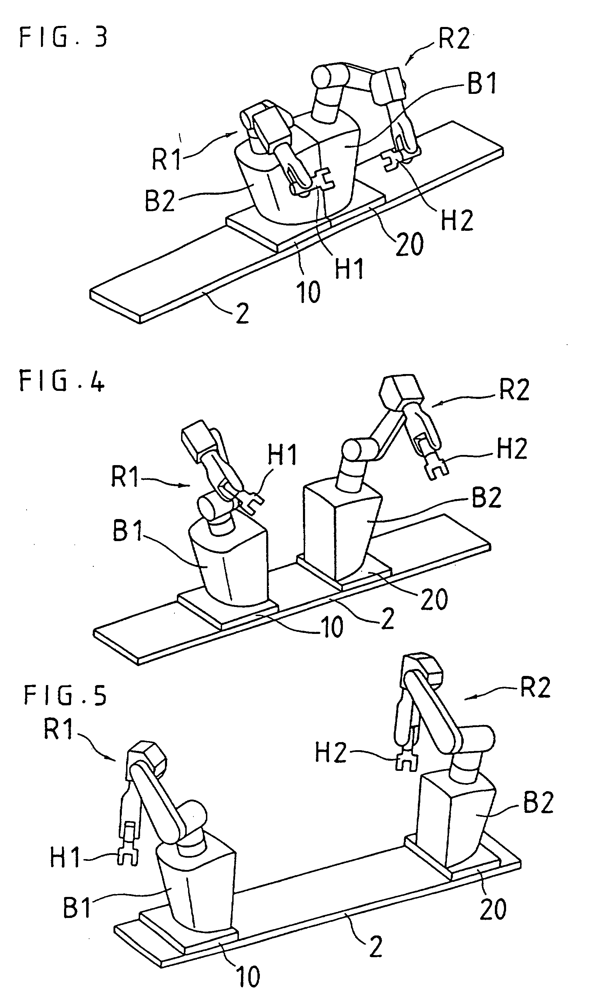

FIG. 3 is a perspective view corresponding to FIG. 2A, schematically showing a state in which the two robots are performing dual-arm cooperative operation while being positioned close to each other. FIG. 4 is a perspective view corresponding to a state in which the two robots are at intermediate positions between the positions of FIG. 2A and those of FIG. 2B, schematically showing a state in which the two robots are separated slightly further from the state of FIG. 3. FIG. 5 is a perspective view corresponding to FIG. 2B, schematically showing a state in which the two robots are allowed to operate independently while being positioned completely apart from each other after undergoing the state of FIG. 3 and the state of FIG. 4.

With reference to these figures, the layout of the entire system will first be described. On a guide rail shaped robot travel path 2, two traveling bases 10 and 20 are mounted through a known travel axis mechanism such as a ball thread mechanism so as to be capable of traveling. Onto these traveling bases 10 and 20, bases B1 and B2 of the robots R1 and R2 are fixed, respectively. The robots R1 and R2 are not limited to the robots of the same type and the same size. For example, in order to make easier three-dimensional work, two robots having the bases B1 and B2 of different height can be used. The power cable, the signal cable, and the like (not shown) may be contained in the bases B1 and B2.

As shown in FIGS. 2A and 2B, supply ends of many supply conveyors 31 are provided on one side of the robot travel path 2, though divided into two supply-line groups SP1 and SP2.

Many assembled parts W₁ to Wₙ of various kinds are placed on each conveyor 31 in order to be supplied successively to the holding position of the robots R1 and R2 according to the progress of the assembly work. The extending direction of each conveyor intersects (at right angles in this embodiment) the robot travel path 2, so that all the supply ends are positioned along the adjacent zone of the robot travel path.

A rotating hand stand 4 is arranged between the conveyor rows belonging to the supply-line groups SP1 and SP2, so that both robots can easily approach to the hands at any time. Provided in the rotating hand stand 4 is provided a hand magazine MG, which contains various hands (for example, a holding hand and a screw tightening hand).

This rotating hand stand 4 is located approximately at the middle point of the length of the robot travel path 2. At the position opposite to the rotating hand stand 4 with respect to the robot travel path 2, an assembly table TB is provided. In the vicinity of the assembly table TB, an unloading conveyor 32 is arranged to unload finished units W which have gone through the assembly work.

At the distal end of each of robot R1 and R2, a hand H1 or H2 suitable for performing the next work process is mounted via a mounting section (not shown) including a known hand exchange mechanism. When the exchange of hand is needed, the robot R1 or R2 is run and moved to a position near the rotating hand stand 4, where hand exchange is performed via the hand exchange mechanism through the cooperation of the robot R1 or R2 and the rotating hand stand 4.

When the industrial robot apparatus of the present invention is used in such a manner, the layout of the entire assembly work system can be made very compact, and moreover the apparatus is very advantageous in increasing the work efficiency, because all the elements to which the robot must approach are arranged along the robot travel path 2 mainly around the central portion of the robot travel path 2.

In general, the dual-arm cooperative operation is performed by the robots R1 and R2 with the distance between the robots R1 and R2 on the robot travel path 2 being kept constant. This distance can be selected freely. FIG. 3 shows an example in which the dual-arm cooperative operation is performed with the bases B1 and B2 of the two robots being brought into contact. Such a dual-arm cooperative operation is often used in carrying out assembly work on-the assembly table TB. In FIGS. 3 to 5, the illustration of the held part is omitted.

Assuming the case where one process by the dual-arm cooperative action on the assembly table TB in the state shown in FIG. 3 is completed, and the step for assembling the next part group (W₁ to Wₙ) is to be started. According to the typical assembly work executing procedure of the industrial robot apparatus illustrated, the robots R1 and R2, once canceling the dual-arm cooperative state, will travel independently to pick out and carry necessary parts from the next part group (W₁ to Wₙ) onto the assembly table TB, achieving the state shown in FIG. 5 through the state shown in FIG. 4.

In the state shown in FIG. 5 corresponding to the appearance shown in FIG. 2B, the two robots are separated completely for being ready, to perform independent operation. The positions of the robots are near the conveyor supply end of the supply series groups SP1 and SP2 for each robot.

The robots R1 and R2 hold a necessary part and carry it onto the assembly table TB at the position shown in FIG. 5 or FIG. 2B. When two or more parts required for the next process are placed on the assembly table TB, the robots R1 and R2 are returned again to the dual-arm cooperative state shown in FIG. 3 through the state shown in FIG. 4 in order to carry out assembly work on the assembly- table TB. The finished unit which has gone through assembly work is placed on the unloading conveyor 32, which is controlled by a command from the robot controller, to be sent to the next process.

The above is a typical assembly work executing procedure using the industrial robot apparatus. The detail of working sequence, including the selective use of the independent operation and cooperation of the robots, and the selective use of the movement of each robot by robot traveling and arm movement is defined by a series of operation programs prepared based on the contents of actual works.

In general, the robot operation in the assembly process (for example, screw tightening work) often requires high accuracy. Therefore, when assembly work is to be carried out by dual-arm cooperative operation with the robot bases being in contact with each other as shown in FIG. 3, it is desirable to prevent, as far as possible, the robot from becoming instable due to the effect of the reaction.

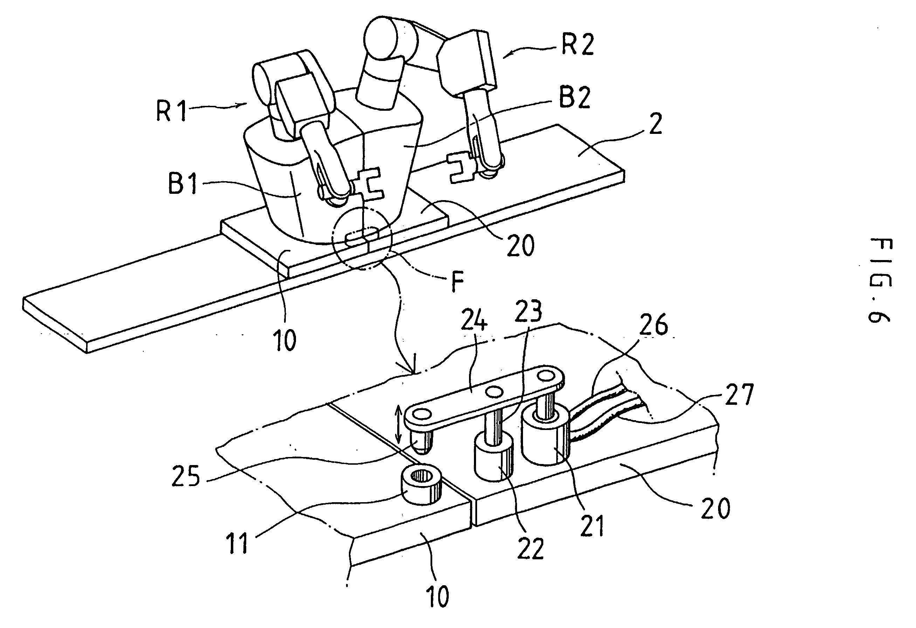

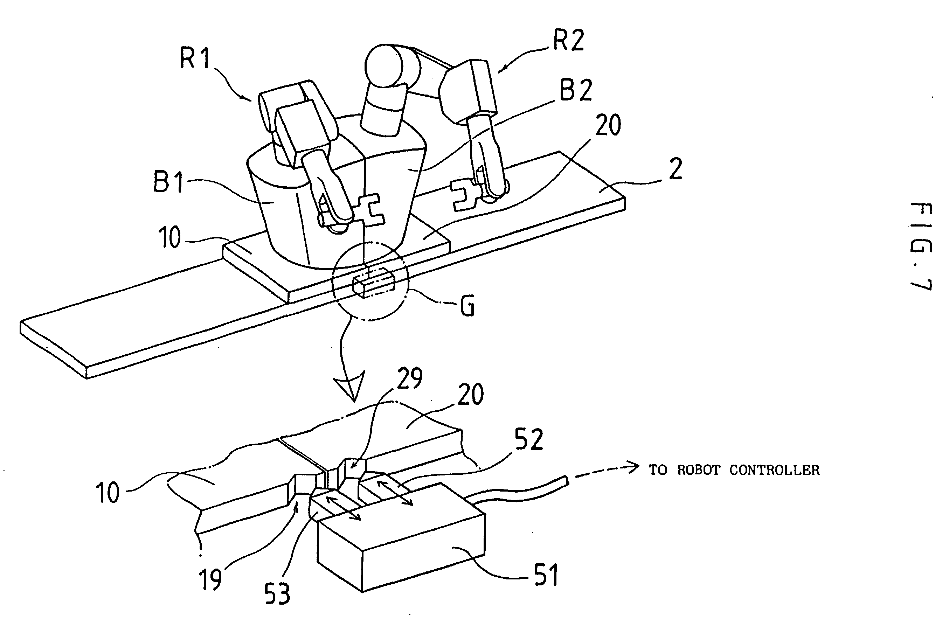

FIGS. 6 and 7 show embodiments of the robot-to-robot connecting device and the robots-to-base coupling device proposed to solve this problem.

First, FIG. 6 shows a general configuration of an example of a connecting device for connecting two traveling bases each other by using air drive. The connecting device is provided at the location bridging both the traveling bases 10 and 20, indicated by reference character F. FIG. 6 also shows the enlarged view of the location F.

Referring to this enlarged view, the connecting device has an air cylinder 21 provided on one traveling base 20 and a guide bush 22, and a guide pin 23 of a connecting bar 24 is inserted into the guide bush 22. On the other traveling base 10, a connecting bush-11 is provided. To the air cylinder 21, air supply hoses 26 and 27 are connected to supply air for clamping and unclamping.

When the robots are in contact with each other as shown in FIG. 2A or FIG. 3, air is supplied from an air supply source, not shown, through the air supply hose 26 by the command from the robot controller, causing the connecting bar 24 to move in the downward direction indicated by the double-headed arrow by an air pressure, by which the guide pin 23 and the connecting pin 25 are inserted into the guide bush 22 and the connecting bush 11, respectively. Thereupon, a mechanical connection between the two robots R1 and R2 is achieved, so that the instability of each robot due to the effect of the reaction during its operation can be avoided.

To separate the robots R1 and R2, or to have them transferred to the state of either FIG. 4 or FIG. 5 from the state of FIG. 3, by releasing the connected state, air is supplied from an air supply source, not shown, through the air supply hose 27 by the command from the robot controller, causing the connecting bar 24 to move in the upward direction indicated by the double-headed arrow by an air pressure, by which the guide pin 23 and the connecting pin 25 leave the guide bush 22 and the connecting bush 11, respectively. Thereupon, the mechanical connection between the two robots R1 and R2 is released, thereby enabling the robots to travel independently on the robot travel path 2.

Next, FIG. 7 shows a general configuration of an example of a coupling device for fixing two traveling bases to a base portion of the robot travel path (a floor base in this embodiment) using air drive. The coupling device is located on the floor base near the location indicated by reference character G at one side of each of traveling bases 10 and 20. FIG. 7 also shows the enlarged view of the location G.

Referring to the enlarged view, the coupling device has a V-shaped pin base 51 fixed to the floor base and V-shaped pins 52 and 53 installed in the V-shaped pin base slidably in the horizontal direction (indicated by a double-headed arrow).

At the portions of the travel bases 10 and 20 facing the V-shaped pins 52 and 53, V-shaped concaves 19 and 29 for accommodating these pins are formed. To the V-shaped pin base 51, air supply hoses are connected (not shown) as the case of the connecting device shown in FIG. 6.

When the robots are in contact with each other as shown in FIG. 2A or FIG. 3, air is supplied from an air supply source, not shown, through the air supply hose by the command from the robot controller, causing the V-shaped pins 52 and 53 to be received by and engaged with the V-shaped concaves 19 and 29 at the same time. Thereupon, the two robots R1 and R2 are fixed together to the floor base, so that the instability of robot can be avoided even if being subjected to reaction during its operation.

To separate the robot R1 and R2, or to have them transferred to the state of FIG. 4 or FIG. 5 from the state of FIG. 3, by releasing them from the state fixed to the floor base, air is supplied from an air supply source, not shown, by the command from the robot controller to release the connection, causing the V-shaped pins 52 and 53 to leave the V-shaped concaves 19 and 29, respectively. Thereupon, the mechanical connection of the two robots R1 and R2 to the floor base is released, so that the robot can travel independently on the robot travel path 2.

Explained next is the cooperative operation of the robot R1 or R2 and the rotating hand stand 4 in changing robot hand at any time from the start to the end of work.

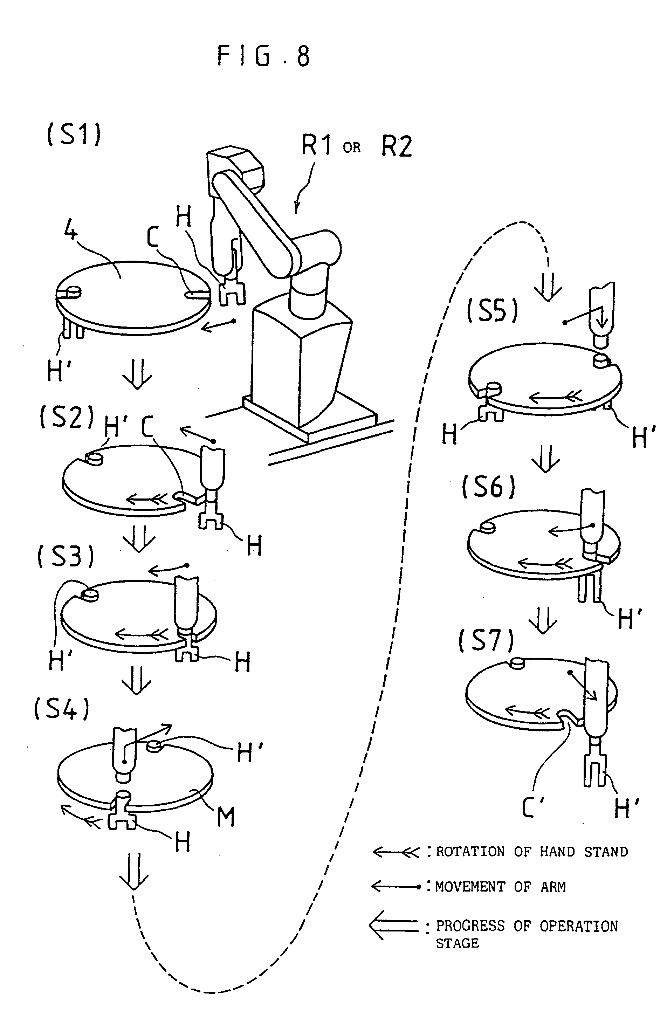

FIG. 8 is a schematic diagram showing the stages of the cooperative operation of the robot R1 or R2 and the rotating hand stand by taking an example of the case where a hand H presently mounted on the robot is exchanged for a hand H' prepared in a hand magazine of the rotating hand stand 4. Here, the outline of the cooperative operation will be described for each of the stages indicated by S1 to S7. In the diagram, an arrow with fletchings denotes the rotation of the hand stand 4, while an arrow without fletchings denotes the motion of the robot arm. These movements are collectively controlled by controlling the motor for each axis of robot and the servo motor M3 for driving the rotating hand stand 4 through the robot controller. Incidentally, a double-line arrow denotes the sequence of the operation stages.
(S1): The rotating hand stand 4 is rotated so that the rest position of the hand H approaches to the robot (R1 or R2, hereinafter omitted). On the other hand, the robot is operated so that the hand H approaches and meet the rotating hand stand 4 at the position where the hand H just faces the hand holding slot C formed at the rest position of hand H.
(S2): When the hand H has approached and come to just face the hand holding slot C, the rotating direction of the rotating hand stand 4 for hand exchange is determined. This rotating direction is usually determined so that the angular interval between the rest positions of the hands H and H' is 180 degrees or less.
(S3): When the rotating direction is determined, the rotating hand stand 4 begins to rotate in that direction. The robot is operated so that is performs an operation in which the motion toward the center of the rotating hand stand 4 is superposed on its motion following the rotation, and the hand H is inserted into the hand holding slot C.
(S4): The robot stops the operation of following the rotating hand stand 4 after releasing the hand H, and moves to the position of the hand H' to be mounted next. Even at this point, the rotating hand stand 4 still continues rotating so that the position where the next following operation is to be started is calculated on the bases of the rotational speed of the rotating hand stand 4 and the movement speed of the robot wrist, and the robot moves to that position. (Giving the radius of rotation of the hand rest position as r, the central angle between the rest positions of hands H and H' as φ, the rotational speed of the rotating hand stand as ω, the movement speed of the robot as v, and the arbitrary position on the arc drawn by the rest position as M, the time t₁ required for the straight movement from the position of the hand H to the position M and the time t₂ required for rotation from the position of the hand H' to the position M are calculated, and the robot wrist is moved to the position M where the relationship of t₁ = t₂ holds.)
(S5): The state in which the robot wrist has reached the position M is shown.
(S6): The hand H' is mounted on the robot wrist while the robot performs the operation for following the rotating hand stand 4.
(S7): After the hand H' has been mounted, the robot leaves the rotating hand stand 4, stopping the following operation.

Now, the exchange of the hand H for the hand H' (cooperative action) has been completed. Afterward, the robot transfers to the next operation with the hand H' being mounted. The above is the description of the embodiment in which two robots are mounted on one common robot travel path. Needless to say, however, the technical matters included in the description relating to the above embodiment are applicable, without requiring any substantial modification, even to the case where the two robots are mounted separately on each of two robot travel paths, except that some minor modifications are required for the robot-to-robot connecting device (see FIG. 6) or the robots-to-base coupling device (see FIG. 7).

In the industrial robot apparatus of the present invention, one common robot travel path or two robot travel paths arranged in parallel are provided between the zone where parts to be assembled are supplied and the zone where the assembly work is performed. The common robot travel path or each of the two parallel robot travel paths is composed of one or two or more guide rails. Therefore, the unit for counting the number of the "robot travel paths" does not necessarily mean the number of the guide rails.

When one common robot travel path is provided, two robots are mounted on this common robot travel path. When two parallel robot travel paths are provided, one robot is mounted on each of the robot travel paths. In the latter case, the distance between the two robot travel paths has to be small enough for at least allowing the cooperative operation of the two robots.

The robot traveling operation and other robot operations (hereinafter simply referred to as "robot operations") of the two robots are controlled by a common control means. This control means can be configured by a robot controller which integrates the control systems of the two robots by means of the bus connection. In the case of independent operation (noncooperative state), the control means may be configured by two robot controllers connected by a communication line, each of which is used as a robot controller for each robot.

The control means is capable of either independently controlling the positions of the two robots on the travel path or independently controlling the operations of the two robots. Also, the control means can make the two robots perform cooperative operation while carrying out control so that the relative positional relationship of the two robots on the robot travel path is kept constant.

Since the parts to be assembled such as mechanical parts are usually supplied via two or more paths, the carrying process for the supplied parts to be assembled can be accomplished by allocating each of robots to each of a supply paths. The parts to be assembled are usually carried onto the assembly table located in the assembly work zone lying on one side of the robot travel path. This work is normally performed by independent control of the two robots (non-dual-arm robot state), but may be performed by cooperative operation in some cases.

After the parts necessary for assembly work have been carried onto the assembly table, the assembly processes are executed in accordance with the work sequence suitable for the parts assembly sequence. In these processes, both of the independent operation and the cooperative operation are selectively employed whenever necessary.

In any work, when the cooperative operation of two robots is required, the positional relationship of the two robots on the robot travel path is kept unchanged.

In order for the industrial robot apparatus to be effectively used for robot hand exchange, a dynamic hand stand means such as a turret type hand stand is provided in a zone between at least two supply paths (near the central one when three or more supply paths are provided). This hand stand is also controlled by a control means common to the two robots. More specifically, for example, the turret type hand stand may be rotated by a servo motor controlled by the control means.

According to one development of the present invention, to protect the robots from adverse effect of reaction where the parts to be assembled are heavy, the industrial robot apparatus is provided with a mechanical connecting means for connecting the two robots to each other on the robot path, or a mechanical coupling means for collectively fixing the two robots to the robot path base.

The positions of mechanical connecting means can be switched from the operative state to the inoperative state or vice versa. The switching control is also made by the control means for controlling the two robots. More specifically, for example, the switching between the operative state and the inoperative state is made by moving a clamp member connected to an electropneumatic means or an electromagnetic means between the operative position and the inoperative position in accordance with the command from the robot controller.

It is thought that these mechanical connecting means are usually made operative during the cooperative work, but sometimes they may be made operative even during the independent work.

The control method itself for obtaining the dual-arm robot system state by performing the cooperative operation of the two robots is not specially limited, and therefore the control method of a master-slave arm system proposed so far can be used appropriately.

Since the described and illustrated embodiment of the present invention has the above-described configuration, the two robots are mounted on a robot travel path common to both the robots or on two parallel robot travel paths, and both the "independent operations of two traveling robots" and the "cooperative operation of two robots arranged so as to keep a constant positional relationship between them (dual-arm robot system state)" are possible. Therefore, each robot can effectively perform its independent operations such as carrying operation as an independently operating robot, and also two robots can perform complicated assembly work and the like by the cooperative dual-arm operation by being arranged in either joined state or closely located state. In other words, the present invention provides an industrial robot apparatus having both the advantage of two single-arm traveling robots and the advantage of one dual-arm traveling robot.

Since the relative positions of the two robots can be selected even during the dual-arm operation depending on the type of work to be executed, the industrial robot apparatus has a function as a dual-arm robot system in which the distance between the two arms is variable.

Further, since the working range of the robot lies extending along the travel path, the parts to be assembled and the like can be supplied into the working range through plural supply paths. If conveyors are arranged in accordance with the type, number, size, shape, etc. of parts, and a travel path having a length large enough for covering overall width of arrayed conveyors is provided, the system configuration itself will not be affected even if the number of supply path increases. Also, there is no need of changing the flow of supplied parts due to the restriction of the robot.

Also, the assembly table can be arranged at an optimum position in consideration of the work efficiency. For example, by arranging the supply conveyor and the assembly table opposite to each other with the travel path interposed therebetween at a position near the center of the length of the travel path, the distances from the supply ends of supply conveyors to the assembly table is made substantially constant to enhance the work efficiency of an independently traveling robot.

A layout, in which the supply zone and the assembly work zone are provided and the supply conveyor and the assembly table are arranged with the travel path interposed therebetween, enables any process to be connected smoothly with the preceding or following process and is advantageous in creating a flow of production line.

For hand exchange, a dynamic hand stand means such as a turret type hand stand is provided in a zone between the plural supply paths (near the central one in the case where three or more supply paths are provided), and the hand stand means can'be driven by a shaft controlled by a robot control means, and so the hand stand and the robot can be operated cooperatively during hand exchange. Consequently, the hand exchange can be executed quickly and reliably.

In one development of the present invention, a configuration is used in which a mechanical connecting means for connecting the two robots to each other on the robot path, or a mechanical coupling means for collectively fixing the two robots to the robot path base is provided in order to protect the robots from an adverse effect of reaction occurring during the operation such as one involving the handling of heavy parts to be assembled, and the switching from the operative state to the inoperative state or vice versa of the mechanical connecting means or the coupling means is made possible by a control means which controls two robots. Thereupon, the robot can be operated in a stable condition even for a work to be subjected to reaction, such as the work where heavy parts are handled by means of dual-arm cooperative operation.

## Claims

1. An industrial robot apparatus comprising:
a robot travel path (2);
a pair of travelling bases (10,20) operable to travel along said travel path (2), each of which bases (10,20) has a respective robot (R1, R2) mounted thereon or is configured integrally with a respective robot (R1, R2);
a robot control means capable of operating the two robots (R1,R2) and capable of controlling the travel of said pair of travelling bases (10,20) along the travel path (2), and the stopping thereof at a predetermined position; and
a common work table (TB) installed within a range which the distal end of the arm of each robot (R1, R2) can reach when the two travelling bases (10,20) are brought closest to each other;
**characterised in that**:
the robot control means is capable of operating the two robots (R1, R2) independently when the two associated travelling bases (10,20) are separated from one another along the travel path (2), and cooperatively when the two travelling bases (10,20) have been brought closest to each other along the travel path (2);
the robot control means can independently control the travel of the pair of travelling bases (10,20);
the common work table (TB) is installed at one lateral side of the travel path (2); and
the two robots (R1, R2) are configured such that their arms can extend together at said one lateral side of the travel path (2), to be capable of adopting a dual-arm cooperative state in order to carry out work together on the common work table (TB).

2. An industrial robot apparatus according to claim 1, wherein respective part supply tables (31) for mounting or supplying parts (W1 to Wn) to be given to each robot (R1,R2) are arranged at that lateral side of said travel path (2) which is opposite to the lateral side thereof where the common work table (TB) is mounted, the part supply tables (31) being located within ranges where they can be reached by the distal ends of the arms of the respective robots (R1, R2) when said two travelling bases (10,20) are separated a certain distance from each other away from said closest position.

3. An industrial robot apparatus according to claim 2, wherein each of said part supply tables (31) comprises a part supply conveyor extending in a direction substantially perpendicular to the travel direction of said travel path (2).

4. An industrial robot apparatus according to any one of the preceding claims, wherein said travel path (2) consists of one path common to said two travelling bases (10,20).

5. An industrial robot apparatus according to any one of claims 1 to 3, wherein said travel path (2) consists of two parallel paths corresponding to respective ones of said two travelling bases (10,20).

6. An industrial robot apparatus according to any one of the preceding claims, wherein a hand stand (4) for holding or placing a plurality of robot hands and for use in exchanging robot hands is installed at a position opposite to said common work table (TB) beyond said path (2) and between said part supply tables (31).

7. An industrial robot apparatus according to claim 6, wherein said hand stand (4) is of a rotating type and the rotation thereof is controlled by a controller in connection with the operation of at least one of the robots (R1, R2).

8. An industrial robot apparatus according to any one of the preceding claims, wherein a connecting device (F) is provided to connect said two travelling bases (10,20) to each other when said travelling bases (10,20) are brought closest to each other.

9. An industrial robot apparatus according to any one of claims 1 to 7, wherein there is provided a connecting device (G) capable of fixing said two travelling bases (10,20) to said travel path (2) or to a floor on which said travel path (2) is laid, when said travelling bases (10, 20) are brought closest to each other.

10. An industrial robot apparatus according to any one of the preceding claims, wherein the robot control means comprises a travel controller to control the travel of said pair of travelling bases (10,20).

11. A work executing method for an industrial robot apparatus, wherein a robot control means operates a pair of travelling bases (10, 20) to travel along a robot travel path (2) and to stop at a predetermined position, each of which bases (10,20) has a respective robot (R1, R2) mounted thereon or is configured integrally with a respective robot (R1, R2);
**characterised in that**:
the robot control means independently controls the travel of the pair of travelling bases (10,20), operates the two robots (R1, R2) independently when the two associated travelling bases (10,20) are separated from one another along the travel path (2), and cooperatively when the two travelling bases (B1, B2) have been brought closest to each other along the travel path (2); and
in the latter case the robot control means operates the two robots (R1, R2) in a dual-arm cooperative state to carry out work together on a common work table (TB) installed at one lateral side of the travel path (2).

12. A work executing method for an industrial robot apparatus according to claim 11, comprising the steps of:
making a robot hand hold a part to be assembled or fabricated when the pair of travelling bases (10,20) are separated from each other on the travel path (2);
moving said pair of travelling bases (10,20) to approach one another on said travel path (2);
switching the control mode of each robot (R1, R2) from a previous independent operation state, in which said dual-arm cooperative state is inoperative, to the dual-arm cooperative state when said pair of travelling bases (10,20) are brought closest to each other, and making each robot (R1, R2) at this position perform assembly or fabrication work on said common work table (TB) in said dual-arm cooperative state under control of said robot control means; and
switching the control mode of each robot (R1,R2) from said dual-arm cooperative state back to the independent operation state, in which said dual-arm cooperative state is released, after said work is completed.

13. A work executing method for an industrial robot apparatus according to claim 12, further comprising a step of making a robot arm hold one particular hand among hands placed or held on a hand stand (4), by controlling said hand stand (4) in association with the robot operation before said robot performs assembly or fabrication work on said common work table (TB).

14. A work executing method for an industrial robot apparatus according to any one of claims 11 to 13, further comprising a step of connecting said pair of travelling bases (10,20) to each other on said travel path (2) when said travelling bases (10,20) are brought closest to each other.

15. A work executing method for an industrial robot apparatus according to any one of claims 11 to 13, further comprising a step of fixing said pair of travelling bases (10,20) to said travel path (2) or to a floor on which said travel path (2) is laid, when said travelling bases (10,20) are brought closest to each other.

## Patentansprüche

1. Industrie-Robotervorrichtung, die umfasst:
eine Roboter-Arbeitsbewegungs-Bahn (2)
ein Paar von Arbeitsbewegungs-Basen (10, 20), die betätigbar sind, um sich längs der Arbeitsbewegungs-Bahn (2) zu bewegen, wobei jede dieser Basen (10, 20) einen jeweiligen Roboter (R1, R2) hat, der darauf montiert ist, oder integral mit einem jeweiligen Roboter (R1, R2) ausgeführt ist,
ein Roboter-Steuermittel, das in der Lage ist, die zwei Roboter (R1, R2) zu betreiben, und in der Lage ist, die Arbeitsbewegungen des Paares von Arbeitsbewegungs-Basen (10, 20) längs der Arbeitsbewegungs-Bahn (2) zu steuern und dieselben in einer vorbestimmten Position zu stoppen, und
einen gemeinsamen Arbeitstisch (TB), der innerhalb eines Bereichs eingebaut ist, den das körperferne Ende des Arms jedes Roboters (R1, R2) erreichen kann, wenn die zwei Arbeitsbewegungs-Basen (10, 20) am nächsten zueinander gebracht sind,
**dadurch gekennzeichnet, dass**
das Roboter-Steuermittel in der Lage ist, die zwei Roboter (R1, R2) unabhängig zu betreiben, wenn die zwei zugeordneten Arbeitsbewegungs-Basen (10, 20) längs der Arbeitsbewegungs-Bahn (2) voneinander getrennt sind, und zusammenarbeitend zu betreiben, wenn die zwei Arbeitsbewegungs-Basen (10, 20) längs der Arbeitsbewegungs-Bahn (2) am nächsten zueinander gebracht worden sind,
das Roboter-Steuermittel die Arbeitsbewegungen des Paares von Arbeitsbewegungs-Basen (10, 20) unabhängig steuern kann,
der gemeinsame Arbeitstisch (TB) an einem Seitenteil der Arbeitsbewegungs-Bahn (2) angebaut ist und
die zwei Roboter (R1, R2) derart ausgeführt sind, dass sich deren Arme bei dem einen Seitenteil der Arbeitsbewegungs-Bahn (2) gemeinsam erstrecken können, um in der La-ge zu sein, einen Zwei-Arme-Zusammenarbeitszustand anzuneh-men, um zusammen eine Arbeit auf dem gemeinsamen Arbeitstisch auszuführen (TB).

2. Industrie-Robotervorrichtung nach Anspruch 1, bei der jeweilige Teile-Zuführungstische (31) zum Montieren oder Zuführen von Teilen (W1 bis Wn), die jedem Roboter (R1, R2) zuzuführen sind, bei demjenigen Seitenteil der Arbeitsbewegungs-bahn (2) angeordnet sind, der dem Seitenteil derselben gegenüberliegt, wo der gemeinsame Arbeitstisch (TB) montiert ist, wobei sich die Teile-Zuführungstische (31) innerhalb von Bereichen befinden, wo sie von den körperfernen Enden der Arme der jeweiligen Roboter (R1, R2) erreicht werden können, wenn die zwei Arbeitsbewegungs-Basen (10, 20) um einen bestimmten Abstand fort von der nächsten Position voneinander getrennt sind.

3. Industrie-Robotervorrichtung nach Anspruch 2, bei der jeder der Teile-Zuführungstische (31) eine Teile-Zuführungs-Fördervorrichtung umfasst, die sich in einer Richtung im wesentlichen senkrecht zu der Arbeitsbewegungs-Richtung der Arbeitsbewegungs-Bahn (2) erstreckt.

4. Industrie-Robotervorrichtung nach einem der vorhergehenden Ansprüche, bei der die Arbeitsbewegungs-Bahn (2) aus einer Bahn besteht, die den zwei Arbeitsbewegungs-Basen (10, 20) gemeinsam ist.

5. Industrie-Robotervorrichtung nach einem der Ansprüche 1 bis 3, bei der die Arbeitsbewegungs-Bahn (2) aus zwei parallelen Bahnen besteht, die den jeweiligen der zwei Arbeitsbewegungs-Basen (10, 20) entsprechen.

6. Industrie-Robotervorrichtung nach einem der vorhergehenden Ansprüche, bei der ein Hand-Ständer (4) zum Halten oder Plazieren einer Vielzahl von Roboter-Händen und zur Benutzung beim Auswechseln von Roboter-Händen in einer Position, die dem gemeinsamen Arbeitstisch (TB) jenseits der Bahn (2) gegenüberliegt, und zwischen den Teile-Zuführungstischen (31) eingebaut ist.

7. Industrie-Robotervorrichtung nach Anspruch 6, bei der der Hand-Ständer (4) ein drehender Ständer ist und die Drehung desselben durch eine Steuereinrichtung in Verbindung mit dem Betrieb zumindest eines der Roboter (R1, R2) gesteuert wird.

8. Industrie-Robotervorrichtung nach einem der vorhergehenden Ansprüche, bei der eine Verbindungsvorrichtung (F) vorgesehen ist, um die zwei Arbeitsbewegungs-Basen (10, 20) miteinander verbinden zu können, wenn die Arbeitsbewegungs-Basen (10, 20) am nächsten zueinander gebracht sind.

9. Industrie-Robotervorrichtung nach einem der Ansprüche 1 bis 7, bei der eine Verbindungsvorrichtung (G) vorgesehen ist, die in der Lage ist, die zwei Arbeitsbewegungs-Basen (10, 20) an der Arbeitsbewegungs-Bahn (2) oder einem Boden, auf den die Arbeitsbewegungs-Bahn (2) gelegt ist, zu befestigen, wenn die Arbeitsbewegungs-Basen (10, 20) am nächsten zueinander gebracht sind.

10. Industrie-Robotervorrichtung nach einem der vorhergehenden Ansprüche, bei der das Roboter-Steuermittel eine Arbeitsbewegungs-Steuereinrichtung zur Steuerung der Arbeitsbewegungen des Paares von Arbeitsbewegungs-Basen (10, 20) umfasst.

11. Arbeitsausführungs-Verfahren für eine Industrie-Robotervorrichtung, bei der ein Roboter-Steuermittel ein Paar von Arbeitsbewegungs-Basen (10, 20) betreibt, um diese längs einer Roboter-Arbeitsbewegungs-Bahn (2) zu bewegen und in einer vorbestimmten Position zu stoppen, wobei jede dieser Basen (10, 20) einen jeweiligen Roboter (R1, R2) hat, der darauf montiert ist, oder integral mit einem jeweiligen Roboter (R1, R2) ausgeführt ist,
**dadurch gekennzeichnet, dass**
das Roboter-Steuermittel die Arbeitsbewegungen des Paares von Arbeitsbewegungs-Basen (10, 20) unabhängig steuert, die zwei Roboter (R1, R2) unabhängig betreibt, wenn die zwei zugeordneten Arbeitsbewegungs-Basen (10, 20) längs der Arbeitsbewegungs-Bahn (2) voneinander getrennt, und zusammenarbeitend betreibt, wenn die zwei Arbeitsbewegungs-Basen (B1, B2) längs der Arbeitsbewegungs-Bahn (2) am nächsten zueinander gebracht worden sind, und
in letzterem Falle das Roboter-Steuermittel die zwei Roboter (R1, R2) in einem Zwei-Arme-Zusammenarbeitszustand betreibt, um sie zusammen eine Arbeit auf einem gemeinsamen Arbeitstisch (TB) ausführen zu lassen, der an einem Seitenteil der Arbeitsbewegungs-Bahn (2) angebaut ist.

12. Arbeitsausführungs-Verfahren für eine Industrie-Robotervorrichtung nach Anspruch 11, das Schritte umfasst zum
Veranlassen einer Roboter-Hand, ein Teil zu halten, das einzubauen oder zu fertigen ist, wenn die Basen des Paares von Arbeitsbewegungs-Basen (10, 20) auf der Arbeitsbewegungs-Bahn (2) voneinander getrennt sind,
Bewegen der Basen des Paares von Arbeitsbewegungs-Basen (10, 20), um sie auf der Arbeitsbewegungs-Bahn (2) einander anzunähern,
Umschalten des Steuerungsmodus jedes Roboters (R1, R2) von einem vorhergehenden unabhängigen Betriebszustand, in dem der Zwei-Arme-Zusammenarbeitszustand außer Betrieb ist, zu dem Zwei-Arme-Zusammenarbeitszustand, wenn die Basen des Paares von Arbeitsbewegungs-Basen (10, 20) am nächsten zueinander gebracht sind, und Veranlassen jedes Roboters (R1, R2) in dieser Position, Zusammenbau- oder Fertigungsarbeit auf dem gemeinsamen Arbeitstisch (TB) in dem Zwei-Arme-Zusammenarbeitszustand unter Steuerung durch das Roboter-Steuermittel durchzuführen, und
Umschalten des Steuerungsmodus jedes Roboters (R1, R2) von dem Zwei-Arme-Zusammenarbeitszustand zurück zu dem unabhängigen Betriebszustand, in dem der Zwei-Arme-Zusammenarbeitszustand aufgehoben ist, nachdem die Arbeit beendet ist.

13. Arbeitsausführungs-Verfahren für eine Industrie-Robotervorrichtung nach Anspruch 12, das ferner einen Schritt umfasst zum Veranlassen eines Roboter-Arms, eine spezielle Hand von Händen, die auf einem Hand-Ständer (4) plaziert oder gehalten sind, durch Steuern des Hand-Ständers (4) in Verbindung mit dem Roboter-Betrieb zu halten, bevor der Roboter eine Zusammenbau- oder Fertigungsarbeit auf dem gemeinsamen Arbeitstisch (TB) durchführt.

14. Arbeitsausführungs-Verfahren für eine Industrie-Robotervorrichtung nach einem der Ansprüche 11 bis 13, das ferner einen Schritt umfasst zum Verbinden der Basen des Paares von Arbeitsbewegungs-Basen (10, 20) miteinander an der Arbeitsbewegungs-Bahn (2), wenn die Arbeitsbewegungs-Basen (10, 20) am näch-sten zueinander gebracht sind.

15. Arbeitsausführungs-Verfahren für eine Industrie-Robotervorrichtung nach einem der Ansprüche 11 to 13, das ferner einen Schritt umfasst zum Befestigen der Basen des Paares von Arbeitsbewegungs-Basen (10, 20) an der Arbeitsbewegungs-Bahn (2) oder einem Boden, auf den die Arbeitsbewegungs-Bahn (2) gelegt ist, wenn die Arbeitsbewegungs-Basen (10, 20) am näch-sten zueinander gebracht sind.

## Revendications

1. Un appareil formant robot industriel comprenant :
un chemin de déplacement (2) de robot ;
une paire d'embases déplaçables (10, 20) pouvant être actionnée pour se déplacer le long dudit chemin de déplacement (2), chacune des embases (10, 20) ayant un robot respectif (R2) monté sur elle ou étant configurée pour faire partie intégrante d'un robot respectif (R1, R2) ;
des moyens de commande de robot susceptibles d'actionner les deux robots (R1, R2) et susceptibles de commander le déplacement de ladite paire d'embases déplaçables (10, 20) le long du chemin de déplacement (2), et leur arrêt au niveau d'une position prédéterminée ; et
une table de travail commune (TB) placée à l'intérieur d'un domaine que l'extrémité distale du bras de chaque robot (R1, R2) peut atteindre lorsque les deux embases déplaçables (10, 20) sont amenées le plus près l'un de l'autre ;
**caractérisé en ce que** :
les moyens de commande de robot sont susceptibles d'actionner les deux robots (R1, R2) de manière indépendante lorsque les deux embases déplaçables associées (10, 20) sont séparées l'une de l'autre le long du chemin de déplacement (2), et de manière coopérante lorsque les deux embases déplaçables (10, 20) ont été amenées le plus près l'une de l'autre le long du chemin de déplacement (2) ;
les moyens de commande de robot peuvent commander de manière indépendante le déplacement de la paire d'embases déplaçables (10, 20) ;
la table de travail commune (TB) est placée au niveau d'un premier côté latéral du chemin de déplacement (2); et
les deux robots (R1, R2) sont configurés de telle manière que leurs bras peuvent s'étendre ensemble au niveau dudit premier côté latéral du chemin de déplacement (2) pour être susceptibles d'adopter un état de coopération à deux bras de manière à effectuer ensemble un travail sur la table de travail commune (TB).

2. Un appareil formant robot industriel selon la revendication 1, dans lequel des tables d'amenée de pièces respectives (31) pour le montage ou l'amenée de pièces (W1 à Wn) devant être données à chaque robot (R1, R2) sont disposées au niveau du côté latéral dudit chemin de déplacement (2) qui est opposé à son côté latéral où est montée la table de travail commune (TB), les tables d'amenée de pièces (31) étant placées à l'intérieur de domaines où elles peuvent être atteintes par les extrémités distales des bras des robots respectifs (R1, R2) lorsque lesdites embases déplaçables (10, 20) sont séparées l'une de l'autre d'une certaine distance par rapport à leur position où elles sont le plus près l'une de l'autre.

3. Un appareil formant robot industriel selon la revendication 2, dans lequel chacune des tables d'amenée de pièces (31) comprend un transporteur d'amenée de pièces s'étendant dans une direction sensiblement perpendiculaire à la direction de déplacement dudit chemin de déplacement (2).

4. Appareil formant robot industriel selon l'une quelconque des revendications précédentes, dans lequel ledit chemin de déplacement (2) se compose d'un chemin commun auxdites deux embases déplaçables (10, 20).

5. Un appareil formant robot industriel selon l'une quelconque des revendications 1 à 3, dans lequel ledit chemin de déplacement (2) se compose de deux chemins parallèles correspondant aux chemins respectifs desdites deux embases déplaçables (10, 20).

6. Un appareil formant robot industriel selon une quelconque des revendications précédentes, dans lequel un support de mains (4), prévu pour tenir ou placer une pluralité de mains du robot et pour être utilisé dans des remplacements des mains du robot, est placé au niveau d'une position opposée à ladite table de travail commune (TB) au delà dudit chemin (2) et entre lesdites tables d'amenée de pièces (31).

7. Un appareil formant robot industriel selon la revendication 6, dans lequel ledit support des mains (7) est d'un type rotatif et sa rotation est commandée par un organe de commande en liaison avec le fonctionnement d'au moins un des robots (R1, R2).

8. Un appareil formant robot industriel selon une quelconque des revendications précédentes, dans lequel on prévoit un dispositif de liaison (F) pour relier l'une à l'autre lesdites embases déplaçables (10, 20), lorsque lesdites embases déplaçables ((10, 20) sont amenées le plus près l'une de l'autre.

9. Un appareil formant robot industriel selon une quelconque des revendications 1 à 7, dans lequel on prévoit un dispositif de liaison (G) susceptible de fixer lesdits deux embases déplaçables (10, 20) audit chemin de déplacement (2) ou à un plancher sur lequel est placé ledit chemin de déplacement (2), lorsque lesdites embases déplaçables (10, 20) sont amenées le plus près l'une de l'autre.

10. Un appareil formant robot industriel selon une quelconque des revendications précédentes, dans lequel les moyens de commande de robot comprennent un organe de commande de déplacement pour commander le déplacement de ladite paire d'embases déplaçables (10, 20).

11. Un procédé d'exécution de travaux pour un appareil formant robot industriel, dans lequel des moyens de commande de robot actionnent une paire d'embases déplaçables (10, 20) pour se déplacer le long d'un chemin de déplacement de robot (2) et s'arrêter au niveau d'une position prédéterminée, chacune desdites embases (10, 20) ayant un robot respectif (R1, R2) monté sur elle ou étant configurée pour faire partie intégrante d'un robot respectifs (R1, R2) ;
**caractérisé en ce que** :
les moyens de commande de robot commandent de manière indépendante le déplacement de la paire d'embases déplaçables (10, 20), actionnent les deux robots (R1, R2) de manière indépendante lorsque les deux embases déplaçables associées (10, 20) sont séparées l'un de l'autre le long du chemin de déplacement (2) et de manière coopérante lorsque les deux embases déplaçables (B1, B2) ont été amenées le plus près l'une de l'autre le long du chemin de déplacement (2) ; et
dans le dernier cas, les moyens de commande de robot actionnent les deux robots (R1, R2) dans un état de coopération à deux bras pour effectuer ensemble un travail sur une table de travail commune (TB) placée au niveau d'un premier côté latéral du chemin de déplacement (2).

12. Un procédé d'exécution de travaux pour un appareil formant robot industriel selon la revendication 11, comprenant les étapes consistant à :
faire qu'une main de robot maintienne une pièce devant être assemblée ou fabriquée lorsque les embases de la paire d'embases déplaçables (10, 20) sont séparées l'une de l'autre sur le chemin de déplacement (2).
déplacer ladite paire d'embases déplaçables (10, 20) pour les rapprocher l'une de l'autre sur ledit chemin de déplacement (2) ;
commuter le mode de commande de chaque robot (R1, R2) depuis un état de fonctionnement indépendant précédent, dans lequel ledit état de coopération à deux bras n'est pas opératif, jusqu'à l'état de coopération à deux bras lorsque les embases de ladite paire d'embases déplaçables (10, 20) sont amenées le plus près l'une de l'autre, et faire qu'à cette position chaque robot (R1, R2) effectue un travail d'assemblage ou de fabrication sur ladite table de travail commune (TB) dans ledit état de coopération à deux bras sous la commande desdits moyens de commande de robot ; et
commuter le mode de commande de chaque robot (R1, R2), depuis ledit état de coopération à deux bras, en retour vers l'état de fonctionnement indépendant, dans lequel ledit état de coopération à deux bras est libéré, après que ledit travail est terminé.

13. Un procédé d'exécution de travaux pour un appareil formant robot industriel selon la revendication 12, comprenant en outre une étape consistant à faire qu'un bras de robot maintient une main particulière parmi des mains placées ou maintenues sur un support de mains (4), en commandant ledit support de mains (4) en association avec le fonctionnement du robot avant que ledit robot effectue un travail d'assemblage ou de fabrication sur ladite table de travail commune (TB).

14. Un procédé d'exécution de travaux pour un appareil formant robot industriel selon une quelconque des revendications 11 à 13, comprenant en outre une étape consistant à relier l'une à l'autre les embases de ladite paire d'embases déplaçables (10, 20) sur ledit chemin de déplacement (2) lorsque lesdites embases déplaçables (10, 20) sont amenées le plus près l'une de l'autre.

15. Un procédé d'exécution de travaux pour un appareil formant robot industriel selon l'une quelconque des revendications 11 à 13, comprenant en outre une étape consistant à fixer ladite paire d'embases déplaçables (10, 20) sur ledit chemin de déplacement (2) ou sur un plancher sur lequel est posé ledit chemin de déplacement (2), lorsque lesdites embases déplaçables (10, 20) sont amenées le plus près l'une de l'autre.
